# EUROPEAN PATENT SPECIFICATION

(11) **EP 2 963 903 B1**
(45) Date of publication and mention of the grant of the patent: **10.10.2018**
(21) Application number: 13806371.4
(22) Date of filing: 26.08.2013
(51) Int. Cl.: G06F 21/50, G06F 21/88, H04M 1/67, H04W 12/12, H04M 11/04

(54) **MOBILE TERMINAL ALARM METHOD AND DEVICE, AND MOBILE TERMINAL**
ALARMVERFAHREN UND -VORRICHTUNG FÜR EIN MOBILES ENDGERÄT UND MOBILES ENDGERÄT
PROCÉDÉ ET DISPOSITIF D'AVERTISSEMENT DE TERMINAL MOBILE ET TERMINAL MOBILE

(30) Priority: 01.03.2013 CN 201310066675
(43) Date of publication of application: 06.01.2016
(73) Proprietor: ZTE Corporation, Shenzhen, Guangdong 518057 (CN)
(72) Inventor: ZHANG, Fengyu, Shenzhen Guangdong 518057 (CN); WANG, Xuehong, Shenzhen Guangdong 518057 (CN)
(74) Representative: Lavoix
(86) International application number: PCT/CN2013/082314
(87) International publication number: WO 2013/189439

(56) References cited:
- CN-A- 1 708 052
- CN-A- 1 708 052
- CN-A- 1 893 493
- CN-A- 1 893 493
- CN-A- 101 222 558
- CN-A- 102 387 498
- CN-A- 102 750 796
- US-A1- 2006 146 036

## Description

### TECHNICAL FIELD

The present disclosure relates to alarm technology, and more particularly to an alarm method and an alarm device for a mobile terminal, and the mobile terminal.

### BACKGROUND

With the rapid development of the communication technology, user equipment becomes more and more popular. Particularly, a smart terminal, such as a smart phone, is more popular with users due to its fastness and convenience. Generally, the private information of a user, such as a bank card number and an ID number of a family member, is collected in the smart phone, which may bring convenience to the user but may also cause a security problem. When the smart phone is stolen or the private information is snooped, a loss may be caused to the user.

At present, the following methods are adopted to ensure the security of information in the smart phone: a fingerprint identifier is built-in in the smart phone and the smart phone is started via the fingerprint of the user; or, the communication content, such as conversation and a short message, is encrypted and decrypted. Although the security of the information in the smart phone can be protected, the production cost of the smart phone may be increased undoubtedly by methods of arranging a fingerprint identifier in the smart phone which try to change the structure of the smart phone to achieve the aim of protecting the security of information. In terms of the method for ensuring the security by encrypting and decrypting the conversation content, interference information is usually added in a short message and cannot be found until the short message is decrypted successfully, thus, the waste of software and hardware processing resources of the smart phone is caused inevitably.

Chinese patent application CN 1893493 describes a system for playing alarming ring pre set by user. User can activate or de-activate pre set alarm through a dialogue box.

### SUMMARY

In view of this, the main objective of the embodiments of the present disclosure is to provide an alarm method and device for a mobile terminal, and the mobile terminal, so as to implement automatic pre-alarm for a smart mobile terminal without changing the structure of the smart mobile terminal, improve the user experience, and save the production cost and the processing resources.

To this end, the technical solution of the embodiments of the present disclosure is implemented as follows:
An embodiment of the present disclosure provides an alarm method for a mobile terminal, after a pre-alarm function of the mobile terminal is enabled, the method includes:
when it is detected that an input operation is performed on the mobile terminal, pre-alarm information is generated and output.

In the solution, before the pre-alarm function of the mobile terminal is enabled, the method may further include that the pre-alarm function is set for the mobile terminal.

In the solution, the step that the pre-alarm function is set for the mobile terminal may include:
a pre-alarm function menu is created, a pre-alarm function switch is set in the pre-alarm function menu, and a pre-alarm output way is set, wherein the pre-alarm information is different from a call or short message reminder message of the mobile terminal.

In the solution, the step that when it is detected that input operation is performed on the mobile terminal, pre-alarm information is generated and output may include:
when it is detected that a touch screen or a function key of the mobile terminal is pressed or it is detected that an enabling instruction is input for an application of the mobile terminal, pre-alarm information is generated, and the pre-alarm information is output according to the set pre-alarm output way.

In the solution, the method may further include:
a pre-alarm area is set on the touch screen of the mobile terminal;
when the pre-alarm function is not enabled, the pre-alarm function is enabled when it is detected that the pre-alarm area is clicked; when the pre-alarm function is enabled, the pre-alarm function is disabled when it is detected that the pre-alarm area is clicked; or, clicking times of continuously clicking the pre-alarm area is counted, and the pre-alarm function is enabled or disabled by counting the clicking times.

An embodiment of the present disclosure further provides an alarm device for a mobile terminal, and the device includes a processing module and an output module, wherein
the processing module is configured to enable a pre-alarm function of the mobile terminal, and generate pre-alarm information when detecting that an input operation is performed on the mobile terminal; and
the output module is configured to output the pre-alarm information.

In the solution, the device may further include a setting module which is configured to set the pre-alarm function for the mobile terminal.

In the solution, the setting module may be further configured to create a pre-alarm function menu, set a pre-alarm function switch in the pre-alarm function menu, and set a pre-alarm output way, wherein the pre-alarm information is different from a call or short message reminder message of the mobile terminal.

In the solution, the processing module may be configured to generate the pre-alarm information when detecting that a touch screen or a function key of the mobile terminal is pressed or detecting that an enabling instruction is input for an application of the mobile terminal;
and correspondingly, the output module may be configured to output the pre-alarm information according to the set pre-alarm output way.

In the solution, the setting module may be further configured to set a pre-alarm area on the touch screen of the mobile terminal; and
correspondingly, when the pre-alarm function is not enabled, the processing module enables the pre-alarm function when detecting that the pre-alarm area is clicked; when the pre-alarm function is enabled, the processing module disables the pre-alarm function when detecting that the pre-alarm area is clicked; or, the processing module counts clicking times of continuously clicking the pre-alarm area, and enables or disables the pre-alarm function by counting the clicking times.

An embodiment of the present disclosure further provides a mobile terminal, which is provided with the alarm device in the above solutions.

According to the alarm method and the alarm device for a mobile terminal, and the mobile terminal in which the alarm device is arranged provided by the embodiments of the present disclosure, the pre-alarm function is set to be enabled; when it is detected that the touch screen or the function key of the mobile terminal is pressed or it is detected that an enabling instruction is input for an application of the mobile terminal, the pre-alarm information is generated; and the pre-alarm information is output according to the set pre-alarm output way. Through the technical solution of the embodiments of the present disclosure, automatic pre-alarm can be implemented for a smart mobile terminal; when the mobile terminal is operated accidentally, a notification can be given to a user at once, so that the security of the mobile terminal is ensured, and the user experience is improved; moreover, the structure of the mobile terminal does not need to be changed, and the production cost can be saved.

### BRIEF DESCRIPTION OF THE DRAWINGS

Fig. 1 is a schematic diagram showing the flow of an alarm method for a mobile terminal according to an embodiment of the present disclosure; and
Fig. 2 is a schematic diagram showing the composition structure of an alarm device for a mobile terminal according to an embodiment of the present disclosure.

### DETAILED DESCRIPTION

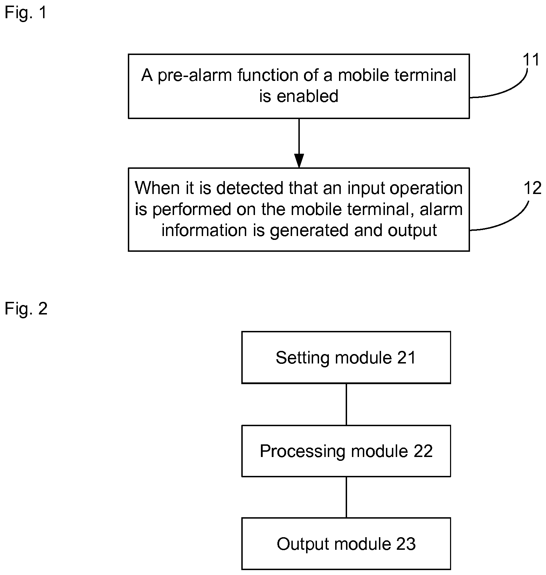

An embodiment of the present disclosure provides an alarm method for a mobile terminal, as shown in Fig. 1, the method includes:
Step 11: A pre-alarm function of the mobile terminal is enabled.

Here, the pre-alarm function is set for the mobile terminal in advance. The step that the pre-alarm function is set for the mobile terminal may include: a pre-alarm function menu is created, a pre-alarm function is set to be enabled in the pre-alarm function menu, and a pre-alarm output way is set, wherein the pre-alarm output way includes an audio way, a video way or a combined way of audio and video. The mobile terminal includes a smart phone and a feature phone.

A pre-alarm area is set on a touch screen of the mobile terminal; when the pre-alarm function is not enabled, the pre-alarm function is enabled when it is detected that the pre-alarm area is clicked; when the pre-alarm function is enabled, the pre-alarm function is disabled when it is detected that the pre-alarm area is clicked; or, clicking times of continuously clicking the pre-alarm area is counted, and the pre-alarm function is enabled or disabled by counting the click times, for example, the pre-alarm function is enabled if the counted times is an odd number and the pre-alarm function is disabled if the counted times is an even number.

Step 12: When it is detected that an input operation is performed on the mobile terminal, alarm information is generated and output.

In the embodiment, the pre-alarm information includes at least one of the following ways: ringtone, vibration and touch panel glittering. The pre-alarm information is different from a call or short message reminder message of the mobile terminal.

A pre-alarm identifier 1 represents that the pre-alarm function of the smart phone is enabled, and a pre-alarm identifier 0 represents that the pre-alarm function is disenabled.

When the pre-alarm function is enabled, namely, the pre-alarm identifier is 1, pre-alarm information, such as ringtone, is generated and output when it is detected that the touch screen or the function key of the mobile terminal is pressed.

Or, when the pre-alarm function is enabled, namely, the pre-alarm identifier is 1, pre-alarm information, such as ringtone, may be generated and output when it is detected that an enabling instruction is input for an application of the mobile terminal, such as a message box and a phone book. For example, when a message box button or a phone book button is clicked, pre-alarm information such as ringtone is generated and output.

After the pre-alarm function is enabled, the screen of the mobile terminal is locked if it is detected that no input operation is performed on the mobile terminal within a preset time, wherein the preset time can be adjusted according to the frequency of utilization of the mobile terminal.

Based on the alarm method for a mobile terminal, an embodiment of the present disclosure further provides an alarm device for a mobile terminal. Fig. 2 is a schematic diagram showing the composition structure of an alarm device for a mobile terminal, as shown in Fig. 2, the device includes a processing module 22 and an output module 23, wherein
the processing module 22 is configured to enable a pre-alarm function of the mobile terminal, and generate pre-alarm information when detecting that an input operation is performed on the mobile terminal; and
the output module 23 is configured to output the pre-alarm information.

Preferably, the device further includes a setting module 21, wherein the setting module 21 is configured to set a pre-alarm function for the mobile terminal and is further configured to create a pre-alarm function menu, set a pre-alarm function switch in the pre-alarm function menu and set a pre-alarm output way; the pre-alarm information is different from a call or a short message reminder message of the mobile terminal.

The processing module 22 is configured to enable the pre-alarm function of the mobile terminal, and generate pre-alarm information when detecting that a touch screen or a function key of the mobile terminal is pressed or an enabling instruction is input for an application of the mobile terminal, such as clicking a message box button or a phone book button;
and correspondingly, the output module 23 is configured to output the pre-alarm information according to the set pre-alarm output way.

The pre-alarm output way includes: an audio way, a video way or a combined way of audio and video; and correspondingly, the pre-alarm information includes at least one of the following ways: ringtone, vibration and touch panel glittering.

The setting module 21 is further configured to set a pre-alarm area in the pre-alarm function menu; correspondingly, when the pre-alarm function is not enabled, the pre-alarm function is enabled when the processing module 22 detects that the pre-alarm area is clicked; when the pre-alarm function is enabled, the pre-alarm function is disabled when the processing module 22 detects that the pre-alarm area is clicked; or, the processing module 22 counts clicking times of continuously clicking the pre-alarm area and enables or disables the pre-alarm function by counting the clicking times. For example, the pre-alarm function is enabled when the clicking times is an odd number and is disabled when the clicking times is an even number.

After the pre-alarm function is enabled, the screen of the mobile terminal is locked if the processing module 22 detects that no input operation is performed on the mobile terminal within a preset time, wherein the preset time is preset in the processing module 22 and can be adjusted according to the frequency of utilization of the mobile terminal.

In the actual application, the setting module 21, the processing module 22 and the output module 23 can be implemented by the Central Processing Unit (CPU), the Digital Signal Processor (DSP) or the Field Programmable Gate Array (FPGA) and the like; and the CPU, DSP and FPGA can be arranged in the mobile terminal.

Those skilled in the art shall understand that the implementing functions of each processing module in the alarm device for a mobile terminal in Fig. 2 can be understood in reference to the related description of the alarm method for a mobile terminal. Those skilled in the art shall understand that the function of each processing unit of the alarm device for a mobile terminal in Fig. 2 can be implemented either by a program running on a processor or by a specific logic circuit.

The present disclosure further records a mobile terminal, including the alarm device in Fig. 2.

According to the alarm method and the alarm device for a mobile terminal, and the mobile terminal provided by the embodiments of the present disclosure, a pre-alarm function is set to be enabled at first, and after the pre-alarm function of the mobile terminal is enabled, when it is detected that the touch screen or the function key of the mobile terminal is pressed or it is detected that an enabling instruction is input for an application of the mobile terminal, pre-alarm information is generated, and the pre-alarm information is output according to a set pre-alarm output way to remind a user that the mobile terminal is being turned on. Through the technical solution of the embodiments of the present disclosure, automatic pre-alarm can be implemented on the smart mobile terminal without changing the structure of the smart mobile terminal, thereby saving the production cost and the processing resources, and improving the user experience.

Provided with the alarm device, the mobile terminal in the embodiment of the present disclosure also has the technical effects.

The above are only the preferred embodiments of the present disclosure, and are not intended to limit the scope of protection of the claims of the present disclosure.

## Claims

1. An alarm method for a mobile terminal, after an alarm function of the mobile terminal is enabled, the method comprising:
generating and outputting alarm information when detecting that an input operation is performed on the mobile terminal,
wherein before the alarm function of the mobile terminal is enabled, the method further comprising: setting the alarm function for the mobile terminal, **characterized in that** the method further comprises:
setting an alarm area on a touch screen of the mobile terminal; and
when the alarm function is not enabled, enabling the alarm function when detecting that the alarm area is clicked; when the alarm function is enabled, disabling the alarm function when detecting that the alarm area is clicked; or, counting clicking times of continuously clicking the alarm area, and enabling or disabling the alarm function by counting the clicking times.

2. The alarm method for a mobile terminal according to claim 1, wherein setting the alarm function for the mobile terminal comprises:
creating an alarm function menu, setting an alarm function switch in the alarm function menu and setting an alarm output way;
wherein the alarm information is different from a call or short message reminder message of the mobile terminal.

3. The alarm method for a mobile terminal according to claim 2, wherein generating and outputting alarm information when detecting that the input operation is performed on the mobile terminal comprises:
when detecting that a touch screen or a function key of the mobile terminal is pressed or detecting that an enabling instruction is input for an application of the mobile terminal, generating the alarm information, and outputting the alarm information according to the set alarm output way.

4. An alarm device for a mobile terminal, comprising a setting module, a processing module and an output module, wherein
the setting module is configured to set an alarm function for the mobile terminal;
the processing module is configured to enable the alarm function of the mobile terminal, and generate alarm information when detecting that an input operation is performed on the mobile terminal; and
the output module is configured to output the alarm information, **characterized in that** the setting module is further configured to set an alarm area on a touch screen of the mobile terminal; and
correspondingly, when the alarm function is not enabled, the processing module enables the alarm function when detecting that the alarm area is clicked; when the alarm function is enabled, the processing module disables the alarm function when detecting that the alarm area is clicked; or, the processing module counts clicking times of continuously clicking the alarm area, and enables or disables the alarm function by counting the clicking times.

5. The alarm device for a mobile terminal according to claim 4, wherein the setting module is further configured to create an alarm function menu, set an alarm function switch in the alarm function menu, and set an alarm output way,
wherein the alarm information is different from a call or short message reminder message of the mobile terminal.

6. The alarm device for a mobile terminal according to claim 5, wherein the processing module is configured to generate the alarm information when detecting that a touch screen or a function key of the mobile terminal is pressed or detecting that an enabling instruction is input for an application of the mobile terminal;
and correspondingly, the output module is configured to output the alarm information according to the set alarm output way.

7. A mobile terminal, provided with the alarm device according to any one of claims 4 to 6.

## Patentansprüche

1. Alarmverfahren für ein mobiles Endgerät nach Aktivierung einer Alarmfunktion des mobilen Endgeräts, wobei das Verfahren umfasst:
Generieren und Ausgeben von Alarminformationen bei Erkennen, dass ein Eingabevorgang am mobilen Endgerät durchgeführt wird,
wobei das Verfahren vor der Aktivierung der Alarmfunktion des mobilen Endgeräts ferner umfasst: Einstellen der Alarmfunktion für das mobile Endgerät,
**dadurch gekennzeichnet, dass** das Verfahren ferner umfasst:
Einstellen eines Alarmbereichs auf einem Berührungsbildschirm des mobilen Endgeräts; und
Aktivieren der Alarmfunktion bei Erkennen, dass der Alarmbereich angeklickt wird, wenn die Alarmfunktion nicht aktiviert ist; Deaktivieren der Alarmfunktion bei Erkennen, dass der Alarmbereich angeklickt wird, wenn die Alarmfunktion aktiviert ist; oder Zählen von Anklick-Malen kontinuierlichen Anklickens des Alarmbereichs und Aktivieren oder Deaktivieren der Alarmfunktion durch Zählen der Anklick-Male.

2. Alarmverfahren für ein mobiles Endgerät nach Anspruch 1, wobei das Einstellen der Alarmfunktion für das mobile Endgerät umfasst:
Erstellen eines Alarmfunktionsmenüs, Einstellen eines Alarmfunktionsschalters im Alarmfunktionsmenü und Einstellen eines Alarmausgabeweges;
wobei die Alarminformationen verschieden von einer Ruf- oder Kurnachrichten-Erinnerungsnachricht des mobilen Endgeräts sind.

3. Alarmverfahren für ein mobiles Endgerät nach Anspruch 2, wobei das Generieren und Ausgeben von Alarminformationen bei Erkennen, dass der Eingabevorgang am mobilen Endgerät durchgeführt wird, umfasst:
Generieren der Alarminformationen und Ausgeben der Alarminformationen gemäß dem eingestellten Alarmausgabeweg bei Erkennen, dass ein Berührungsbildschirm oder eine Funktionstaste des mobilen Endgeräts gedrückt wird, oder Erkennen, dass eine Aktivierungsanweisung für eine Anwendung des mobilen Endgeräts eingegeben wird.

4. Alarmvorrichtung für ein mobiles Endgerät umfassend ein Einstellmodul, ein Verarbeitungsmodul und ein Ausgabemodul, wobei
das Einstellmodul zum Einstellen einer Alarmfunktion für das mobile Endgerät konfiguriert ist;
das Verarbeitungsmodul so konfiguriert ist, dass es die Alarmfunktion des mobilen Endgeräts einstellt und bei Erkennen, dass ein Eingabevorgang am mobilen Endgerät durchgeführt wird, Alarminformationen generiert; und
das Ausgabemodul zum Ausgeben der Alarminformationen konfiguriert ist, **dadurch gekennzeichnet, dass**
das Einstellmodul ferner zum Einstellen eines Alarmbereichs auf einem Berührungsbildschirm des mobilen Endgeräts konfiguriert ist; und
dementsprechend das Verarbeitungsmodul bei Erkennen, dass der Alarmbereich angeklickt wird, die Alarmfunktion aktiviert, wenn die Alarmfunktion nicht aktiviert ist; und bei Erkennen, dass der Alarmbereich angeklickt wird, die Alarmfunktion deaktiviert, wenn die Alarmfunktion aktiviert ist; oder das Verarbeitungsmodul Anklick-Male kontinuierlichen Anklickens des Alarmbereichs zählt und die Alarmfunktion durch Zählen der Anklick-Male aktiviert oder deaktiviert.

5. Alarmvorrichtung für ein mobiles Endgerät nach Anspruch 4, wobei das Einstellmodul ferner zum Erstellen eines Alarmfunktionsmenüs, Einstellen eines Alarmfunktionsschalters im Alarmfunktionsmenü und Einstellen eines Alarmausgabewegs konfiguriert ist,
wobei die Alarminformationen verschieden von einer Ruf- oder Kurnachrichten-Erinnerungsnachricht des mobilen Endgeräts sind.

6. Alarmvorrichtung für ein mobiles Endgerät nach Anspruch 5, wobei das Verarbeitungsmodul so konfiguriert ist, dass es bei Erkennen, dass ein Berührungsbildschirm oder eine Funktionstaste des mobilen Endgeräts gedrückt wird, oder Erkennen, dass eine Aktivierungsanweisung für eine Anwendung des mobilen Endgeräts eingegeben wird, die Alarminformationen generiert;
und dementsprechend das Ausgabemodul zum Ausgeben der Alarminformationen gemäß dem eingestellten Alarmausgabeweg konfiguriert ist.

7. Mobiles Endgerät, das mit der Alarmvorrichtung nach einem der Ansprüche 4 bis 6 versehen ist.

## Revendications

1. Procédé d'alarme pour un terminal mobile, après qu'une fonction d'alarme du terminal mobile a été activée, le procédé comprenant :
la génération et la sortie d'informations d'alarme lors de la détection qu'une opération d'entrée est effectuée sur le terminal mobile,
dans lequel, avant que la fonction d'alarme du terminal mobile ne soit activée, le procédé comprend en outre : le paramétrage de la fonction d'alarme pour le terminal mobile,
**caractérisé en ce que** le procédé comprend en outre :
le paramétrage d'une zone d'alarme sur un écran tactile du terminal mobile ; et
lorsque la fonction d'alarme n'est pas activée, l'activation de la fonction d'alarme lors de la détection qu'un clic est effectué dans la zone d'alarme ; lorsque la fonction d'alarme est activée, la désactivation de la fonction d'alarme lors de la détection qu'un clic dans la zone d'alarme est effectué ; ou, le comptage du nombre de clics des clics continus dans la zone d'alarme, et l'activation ou la désactivation de la fonction d'alarme en comptant le nombre de clics.

2. Procédé d'alarme pour un terminal mobile selon la revendication 1, dans lequel le paramétrage de la fonction d'alarme pour le terminal mobile comprend :
la création d'un menu de fonction d'alarme, le paramétrage d'un commutateur de fonction d'alarme dans le menu de fonction d'alarme et le paramétrage d'une manière de sortir l'alarme ;
dans lequel les informations d'alarme sont différentes d'un appel ou d'un message de rappel de message court du terminal mobile.

3. Procédé d'alarme pour un terminal mobile selon la revendication 2, dans lequel la génération et la sortie d'informations d'alarme lors de la détection que l'opération d'entrée est effectuée sur le terminal mobile comprend :
lors de la détection qu'un écran tactile ou une touche de fonction du terminal mobile est pressé ou de la détection qu'une instruction d'activation est entrée pour une application du terminal mobile, la génération des informations d'alarme, et la sortie des informations d'alarme conformément à la manière de sortir l'alarme paramétrée.

4. Dispositif d'alarme pour un terminal mobile, comprenant un module de paramétrage, un module de traitement et un module de sortie, dans lequel
le module de paramétrage est configuré pour paramétrer une fonction d'alarme pour le terminal mobile ;
le module de traitement est configuré pour activer la fonction d'alarme du terminal mobile, et générer des informations d'alarme lors de la détection qu'une opération d'entrée est effectuée sur le terminal mobile ; et
le module de sortie est configuré pour sortir les informations d'alarme,
**caractérisé en ce que**
le module de paramétrage est en outre configuré pour paramétrer une zone d'alarme sur un écran tactile du terminal mobile ; et
en conséquence, lorsque la fonction d'alarme n'est pas activée, le module de traitement active la fonction d'alarme lors de la détection qu'un clic est effectué dans la zone d'alarme ; lorsque la fonction d'alarme est activée, le module de traitement désactive la fonction d'alarme lors de la détection qu'un clic est effectué dans la zone d'alarme ; ou, le module de traitement compte le nombre de clics des clics continus dans la zone d'alarme, et active ou désactive la fonction d'alarme en comptant le nombre de clics.

5. Dispositif d'alarme pour un terminal mobile selon la revendication 4, dans lequel le module de paramétrage est en outre configuré pour créer un menu de fonction d'alarme, paramétrer un commutateur de fonction d'alarme dans le menu de fonction d'alarme, et paramétrer une manière de sortir l'alarme,
dans lequel les informations d'alarme sont différentes d'un appel ou d'un message de rappel de message court du terminal mobile.

6. Dispositif d'alarme pour un terminal mobile selon la revendication 5, dans lequel le module de traitement est configuré pour générer les informations d'alarme lors de la détection qu'un écran tactile ou une touche de fonction du terminal mobile est pressé ou lors de la détection qu'une instruction d'activation est entrée pour une application du terminal mobile ;
et en conséquence, le module de sortie est configuré pour sortir les informations d'alarme conformément à la manière de sortir l'alarme paramétrée.

7. Terminal mobile, pourvu du dispositif d'alarme selon l'une quelconque des revendications 4 à 6.
